# EUROPEAN PATENT APPLICATION

(11) **EP 1 132 283 A2**
(43) Date of publication of application: **12.09.2001**
(21) Application number: 01200430.5
(22) Date of filing: 06.02.2001
(51) Int. Cl.: B62J 1/00, B62J 1/26

(54) **Leather saddle with cushion**

(30) Priority: 10.02.2000 NL 1014340
(71) Applicant: Lepper Beheer B.V., 6951 KK Dieren (NL)
(72) Inventor: Keulen, Rudi, 6602 ZJ Wijchen (NL); Van der Veer, Popke Binne, 4191 NV Geldermalsen (NL)
(74) Representative: Grootscholten, Johannes Antonius Maria

(57) **Abstract**

The invention relates to a saddle for a cycle-like vehicle, such as a bicycle, a motor-assisted bicycle, a moped and a motorcycle, substantially comprising: a tensioning frame for arranging on the cycle-like vehicle; and a leather saddle cover carried by the tensioning frame, wherein the saddle cover comprises at least one cushion element at positions corresponding with average locations of buttock bones for users.

## Description

The present invention relates to a saddle for a cycle-like vehicle, such as a bicycle, a motor-assisted bicycle, a moped and a motorcycle, substantially comprising:
- a tensioning frame for arranging on the cycle-like vehicle; and
- a leather saddle cover carried by the tensioning frame.

The use of a leather saddle cover is desired by many users, particularly since leather is able to absorb moisture and in principle is thereby more comfortable in use than for instance plastic. A drawback of saddles with leather saddle cover is that they must be worn-in well and intensively for the user to obtain a comfortable seat thereon, and that they feel hard, particularly during this riding-in of the saddle, but also thereafter.

The object of the present invention is to obviate or at least diminish the above mentioned and other problems and drawbacks of the known saddles, for which purpose a saddle is provided according to the present invention which is distinguished in that the saddle cover comprises at least one cushion element at positions corresponding with average locations of buttock bones for users.

Users experience an increased degree of comfort on a saddle according to the present invention, while the required riding-in time and intensity of riding-in are decreased appreciably, if not reduced to zero.

In a preferred embodiment the saddle cover comprises at least one hole separately or jointly at these positions, in which hole the cushion element is arranged. The cushion element thus provides support to the user without the drawbacks of the known hard saddle cover at the specific positions, without great differences in height between the cushion elements and the known harder leather saddle cover situated therearound.

The cushion element preferably has dimensions corresponding with the hole and comprises at least one flange extending beyond the outer edge of the cushion element for connecting the cushion element and the saddle cover. A suitable configuration is thus provided in very simple manner which is easy to realize and can be taken into mass-production.

The flange is herein preferably arranged on the underside of the saddle cover. Use can for instance be made for this purpose of glue or other adhesive, which is arranged on the readily distinguishable flange, whereafter the cushion elements are carried for instance from below into the surface of the saddle cover. Additionally or alternatively a stitching can be applied which fastens the flange and the saddle cover to each other. A good alignment of the cushion elements and the holes also takes place due to the corresponding dimensions. The flange is further a readily distinguishable component of the cushion elements, so that the application of adhesive, such as glue, can take place precisely and in well defined manner without glue residues on the other parts of the cushion element, and, when stitching is used, the extension of the flange through the saddle cover is highly suitable for arranging the stitching.

A saddle according to the invention with a hole preferably comprises the feature that the hole is elongate in at least one direction and extends over the saddle cover in this direction, which substantially corresponds with statistical distribution in the average locations of buttock bones of a large group of users.

Many users will experience optimal comfort if the statistical distribution in the average locations of buttock bones of a large group of users is taken into account.

The cushion element can be manufactured from leather. The favourable properties of leather, i.e. capacity for moisture absorption and breathing of the material as well as assuming a good seat, are hereby retained even for the individual cushion elements. It is however equally possible in the invention for at least the top surface of the cushion elements to be formed from another material, such as a type of imitation leather or skai.

In the case of a leather cushion element, the leather of the part of the cushion element directed at least toward the seat of the saddle is preferably softer than the leather of the saddle cover. Apart from interruption of the tension generated by the tensioning frame in the saddle cover with the cushion, the comfort of the saddle is increased even further with this measure.

In another embodiment a saddle according to the present invention has the feature that substantially the part of the cushion element remote from the seat of the saddle forms a strengthening of the leather saddle cover at the position of the hole. Since the leather saddle cover is tensioned by the tensioning frame and partly for this reason has or acquires the desired properties related to riding-in of the saddle, the tension in the saddle cover can be kept high with this measure without the risk of the saddle cover tearing from the edges of the hole, and the desired tensions corresponding to known saddles can be realized in the saddle cover without the holes for receiving the cushion elements having an intrusive effect hereon.

In a favourable embodiment of the saddle with a flange and a part of the cushion element forming a strengthening of the leather saddle cover, the flange is preferably formed from the part of the cushion element forming the strengthening which is remote from the seat of the saddle. Diverse functions are thus combined and a further simplification is achieved.

According to the invention the cushion element can be filled with different materials, such as polyurethane, rubber, sponge, gel, gum and so on. The function of increasing the comfort with the cushion element in a saddle according to the present invention is further enhanced with such resilient materials.

According to the invention a saddle can have the further feature that the tensioning frame comprises a mattress spring support. The saddle cover is herein better supported and will not sag even after having become wet, which could take place, particularly though not solely in an embodiment with the cushion elements in holes in the actual saddle cover without the mattress spring support, as a result of a possible weakening of the saddle cover due to the holes, and can be effectively prevented with the mattress spring support.

An embodiment of a saddle according to the present invention will be described hereinbelow, only by way of example, with reference to the annexed figures, in which:
fig. 1 shows an exploded perspective view of a saddle according to the present invention;
fig. 2 is a top view of the saddle shown in fig. 1 in assembled state;
fig. 3 shows a perspective view of a cushion element applied in the saddle of fig. 1 and of fig. 2; and
fig. 4 shows a view in cross-section along line IV-IV in fig. 2.

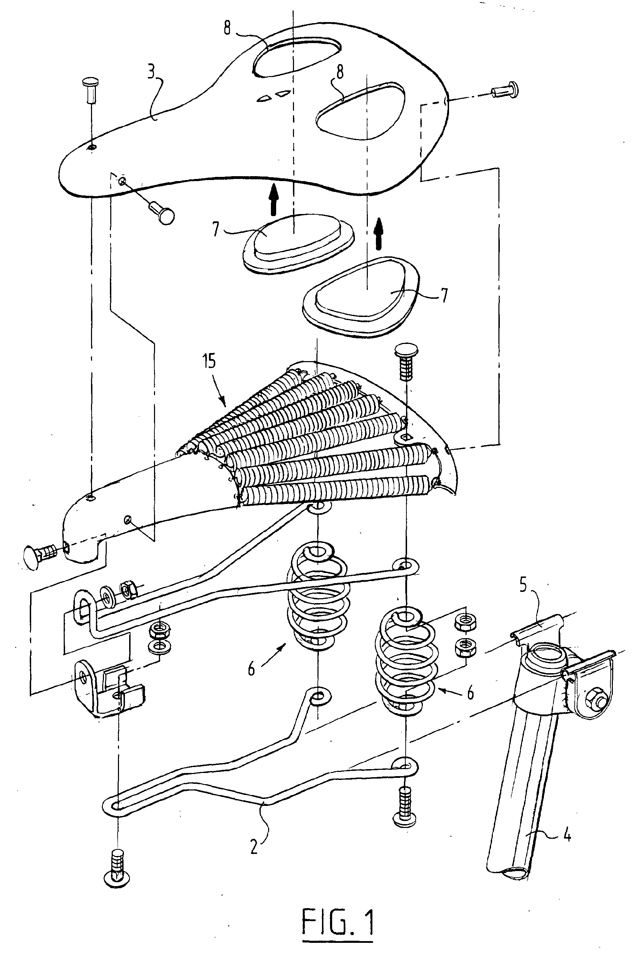

The saddle 1 according to the present invention shown in fig. 1 comprises a tensioning frame 2 by which a leather saddle cover 3 is carried and tensioned.

Tensioning frame 3 can be arranged on the saddle tube 4 of a cycle-like vehicle (not further shown), such as a bicycle, motor-assisted bicycle, moped or motorcycle, by means of coupling 5. Saddle 1 further comprises a spring-mounting 6 between saddle cover 3 of leather and a carrier of tensioning frame 2. Tensioning frame 2 further comprises by way of option a mattress spring support 15 in order to prevent sagging of saddle cover 3.

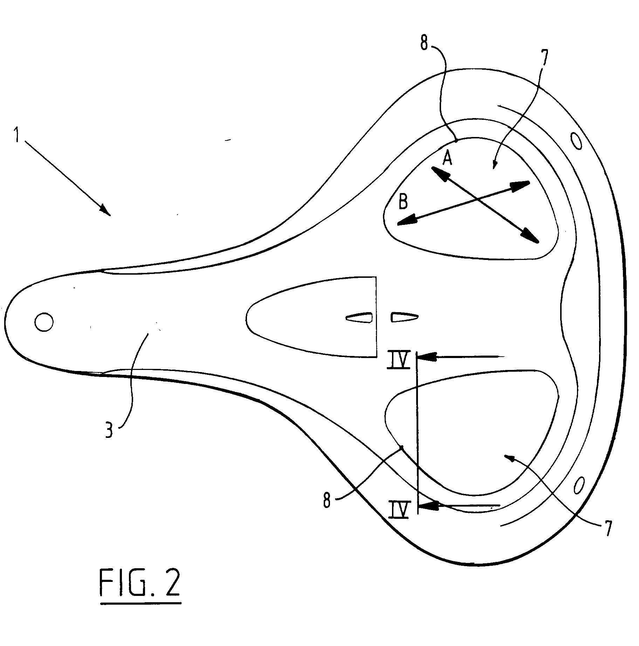

As also shown in fig. 2, saddle 1, and more particularly the leather saddle cover 3 thereof, comprises two cushion elements designed as cushions 7. Cushions 7 are placed in holes which are arranged in leather saddle cover 3 and the edges of which are designated with reference numeral 8.

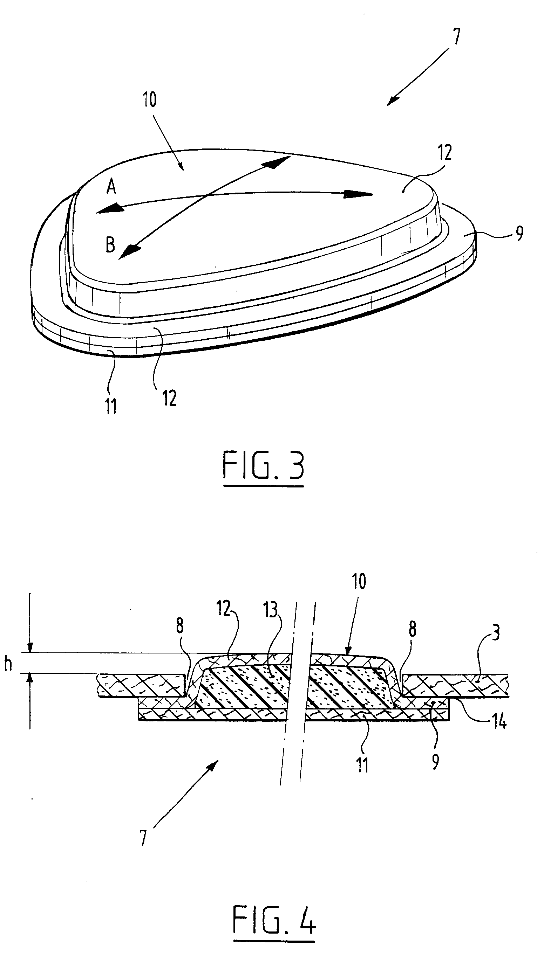

As also shown in fig. 3, each of the cushions 7 is designed such that most, if not all users will sit on cushions 7 with the buttock bones of their backside. The average locations of the buttock bones of users are also taken into account here, wherein cushions 7 are positioned such that they at least correspond with these average locations. Preferably and as is also shown in fig. 2 and fig. 3, cushions 7 extend in at least one direction so far over the saddle cover relative to said average locations of the buttock bones of users that variations herein are also taken into account and, by taking into account the statistical distribution in the average locations of buttock bones of a large group of users, many, if not all users will be seated with their buttock bones on cushions 7, irrespective of personal variations in the location of their buttock bones relative to the average locations of the buttock bones. In fig. 2 the double arrows A and B indicate that in the design of cushions 7 shown in fig. 2 this distribution or variation is taken into account in the directions associated with arrows A and B.

As already noted above, cushions 7 protrude through holes designated with edges 8 in saddle cover 3. As shown in fig. 3, cushions 7 each comprise a flange 9. Cushions 7 thus comprise a cushions part 10, which has a form corresponding with the hole designated with edge 8 in saddle cover 3, and the flange 9, which extends beyond this form of the hole designated with edge 8. In the embodiment shown here, cushions 7 is placed from the underside in fig. 1 into the hole designated by edge 8 in fig. 2, wherein flange 9 extends in fig. 1 under saddle cover 3. This is shown in detailed schematic manner in fig. 4, which is a cross-sectional view along line IV-IV in fig. 2. Flange 9 can be fixed to the underside of saddle cover 3 in diverse ways, for instance with stitching, although adhesive such as glue on top of the flange between flange 9 and the underside of saddle cover 3 is also possible.

As shown in fig. 4, cushion 7 according to the present invention comprises a base layer 11 which, like saddle cover 3, can for instance be of leather with a thickness and toughness usual for application as saddle cover; a top layer 12, which is preferably manufactured from softer leather than the leather of the saddle cover; and a filling 13. Filling 13 can comprise one or more of the resilient materials from the group of polyurethane foam, rubber, sponge, gel, gum, though other materials are also possible. It also the case for base layer 11 and for top layer 12 that materials can be used therefor other than respectively leather with a thickness and toughness usual for application as saddle cover, and leather, such as a type of imitation leather or for instance skai, softer than that of leather saddle cover 3. Use is preferably made of leather for top layer 12, so as to retain the desired favourable properties thereof, i.e. moisture-absorbing capacity and the capacity to adjust to the seat of the user, whereby a significantly greater comfort is achieved than for instance with plastic, although plastic is thus not precluded.

As can be seen clearly from fig. 4, flange 9 is formed from base layer 11, on which a part of the top layer 12 extends between leather saddle cover 3 and base layer 11. Two functions are thus combined in favourable and simple manner.

When base layer 11 of cushions 7 is manufactured from a strong material, for instance as leather saddle cover 3 from leather with a thickness and toughness usual for application as saddle cover, the edges 8 of the holes into which the cushions 7 are placed are held together and relieved of tension. Cushions 7 are arranged against the underside of leather saddle cover 3 with glue layer 14 or, in an embodiment which is not shown, with stitching, and the edges are held together in this embodiment by the strength of base layer 11 such that deformation of these edges is prevented when saddle cover 3 becomes wet and expands or is placed under tension. Base layer 11 is thus a part of the cushion 7 remote from the seat of the saddle and forms a strengthening of leather saddle cover 3 at the position of the hole designated with edges 8.

The embodiment of the invention shown particularly in fig. 4 has the advantage that cushions 7 have only a very limited height difference, designated with h, relative to the surrounding parts of leather saddle cover 3. When cushions 7 are loaded, i.e. when a user sits on the saddle 1 according to the present invention and compresses the filling 13 of cushion 7, this height difference preferably decreases to approximately 0. The user will hereby experience no inconvenience from such a height difference. Particularly if the upper surface of cushion 7 comes to lie below the level of the surrounding parts of the leather saddle cover 3 when the cushions are loaded, the edges 8 of the hole in which the cushion 7 is placed will possibly cause irritation, which is effectively obviated if the height difference h amounts to approximately 0 in the case of loading. When the height difference h has a positive value during loading, i.e. the upper surface of cushion 7 comes to lie above the level of the surrounding parts of leather saddle cover 3 when loaded, the user may slide off the cushions when he loads the cushions substantially close to the edges thereof with his buttock bones. It is precisely because the embodiment of the saddle according to the invention shown here comprises cushions 7 which protrude through a hole designated with edges 8 in leather saddle cover 3, that the height difference h can amount to practically zero between the upper surface of cushions 7 and the surrounding parts of leather saddle cover 3 during loading by a user, while the cushions 7, due to the filling 13 therein of compressible or at least resilient material, produce a high sitting comfort because the cushions 7 and therefore the filling 13 can have an adequate thickness for this purpose.

After examination of the foregoing many alternative embodiments will occur to the skilled person, which he can realize without having to perform any inventive work himself. Given the objectives described in the foregoing, the choices of the different types of material used thus lie well within the reach of this skilled person. In addition, the use of a glue layer to fix the cushions to the leather saddle cover is specifically described, but, as stated, use can be made of stitching or other type of fixing. It is further possible within the scope of the present invention to increase the sitting comfort even further by arranging a continuous cover layer, preferably of leather, over the leather saddle cover and over the upper surface of cushions 7. This prevents with certainty a source of irritation possibly occurring at the edges 8 and thus at the transition between cushions 7 and leather saddle cover 3. This shows that many additional and alternative embodiments are possible, all of which lie within the scope of protection defined in the appended claims.

## Claims

1. Saddle for cycle-like vehicle, such as a bicycle, a motor-assisted bicycle, a moped and a motorcycle, substantially comprising:
- a tensioning frame for arranging on the cycle-like vehicle; and
- a leather saddle cover carried by the tensioning frame, wherein the saddle cover comprises at least one cushion element at positions corresponding with average locations of buttock bones for users.

2. Saddle as claimed in claim 1, wherein the saddle cover comprises at least one hole separately or jointly at these positions, in which hole the cushion element is arranged.

3. Saddle as claimed in claim 2, wherein the cushion element has dimensions corresponding with the hole and comprises at least one flange extending beyond the outer edge of the cushion element for connecting the cushion element and the saddle cover.

4. Saddle as claimed in claim 3, wherein the flange is arranged on the underside of the saddle cover.

5. Saddle as claimed in claim 2, wherein the hole is elongate in at least one direction and extends over the saddle cover in this direction, which substantially corresponds with statistical distribution in the average locations of buttock bones of a large group of users.

6. Saddle as claimed in one or more than one of the foregoing claims, wherein the cushion element is manufactured from leather.

7. Saddle as claimed in claim 6, wherein the leather of the part of the cushion element directed at least toward the seat of the saddle is softer than the leather of the saddle cover.

8. Saddle as claimed in one or more than one of the foregoing claims, wherein substantially the part of the cushion element remote from the seat of the saddle forms a strengthening of the leather saddle cover at the position of the hole.

9. Saddle as claimed in claims 3 and 8, wherein the flange is formed from the part of the cushion element remote from the seat of the saddle.

10. Saddle as claimed in one or more than one of the foregoing claims, wherein the cushion element is filled with at least one of the resilient materials from the group comprising: polyurethane foam, rubber, sponge, gel, gum etc.

11. Saddle as claimed in one or more than one of the foregoing claims, wherein the tensioning frame comprises a mattress spring support.
